# EUROPEAN PATENT APPLICATION

(11) **EP 2 782 042 A2**
(43) Date of publication of application: **24.09.2014**
(21) Application number: 14159439.0
(22) Date of filing: 13.03.2014
(51) Int. Cl.: G06G 1/04

(54) **A composite mathematical instrument**

(30) Priority: 22.03.2013 GB 201305362
(71) Applicant: McBride, Brigid, Wexford Town, Weford (IE)
(72) Inventor: McBride, Brigid, Wexford Town, Weford (IE)
(74) Representative: O'Neill, Brian

(57) **Abstract**

The present invention provides a composite mathematical instrument which includes a flat or planar rectangular body having both ruler and protractor markings disposed along the sides of the body, in addition to a number of openings in the body, each opening having at least an opposed pair of straight and parallel edges with which parallel straight lines may be drawn, the body further including an array of apertures with which to draw circles.

## Description

### Field of the invention

The present invention is concerned with a composite mathematical instrument, and in particular a mathematical instrument for use in drawing or measuring, for use by students or the like in order to provide a means of drawing lines, circles, measuring or drawing angles, and performing various other tasks which are encountered in subjects such as mathematics, technical drawing, etc.

### Background of the invention

In a mathematics and technical drawing classes students are generally required to have and be able to use a ruler, compass, two setsquares (one 30°, 60°, 90° and another 45°, 45°, 90°), and a protractor. It often happens that the student, for one reason or another forgets or is missing some or all of these instruments and therefore cannot carry out the required work, which is both detrimental to the student's educational progress, and is generally disruptive to the class.

One solution to the above problem is to share the instruments of another student. This however slows down the progress of the work in hand for both students and can also be disruptive, thus providing a less than satisfactory solution. Another solution is for the teacher to have some of each instrument to distribute for class use.

If the teacher is providing instruments, the one needed by the individual student must be selected. Selecting, distributing, collecting, checking and storing a variety of instruments is a more complicated procedure than dealing with one.

Where cost is a problem, it may be difficult for students or schools to purchase numerous sets of instruments.

In mathematics, students may need to draw a series of parallel lines for a variety of reasons e.g. to draw a parallelogram, to draw a table for inserting data, to draw a bar chart or a histogram. Usually these functions are carried out by using a ruler to draw each line individually. This can be slow and may not always be well done.

Accordingly there exists a need for one simple, inexpensive, mathematical instrument which can carry out the functions of a ruler, compass, setsquares and protractor and which also allows for a series of parallel lines to be drawn. Another advantage of this composite instrument is that it allows for circles to be drawn without the use of an instrument with a sharp point.

The mathematical instrument could be an addition to the traditional set of instruments or it might be the only instrument the student uses.

### Summary of the invention

According to the present invention there is provided a composite mathematical instrument comprising a planar substantially rectangular body, ruler markings disposed along at least a part of one side of the body, and protractor markings disposed along at least one other side of the body; one or more openings in the body, each having at least an opposed pair of straight and parallel edges, and an array of apertures in the body with which to draw circles.

Preferably, the protractor markings are disposed along three sides of the body.

Preferably, the at least one opening is substantially rectangular.

Preferably, the opposed straight edges of the at least one opening are substantially parallel to an opposed pair of the sides of the body.

Preferably, the composite mathematical instrument comprises two or more of the openings.

Preferably, the opposed pair of straight and parallel edges of each opening are parallel to the opposed pair of straight and parallel edges of the other openings.

Preferably, the body defines a web between adjacent openings.

Preferably, at least some of the apertures are arranged in a plurality of paired groups, the spacing between the pair of apertures in each group being different.

Preferably, at least some of the groups of apertures are provided on the one or more webs.

Preferably, the ruler markings and/or the protractor markings extend inwardly from an exterior edge of the respective side of the body.

Preferably, the one or more openings are coincidentally orientated with the sides of the body.

Preferably, the one or more openings are bound by the sides of the body.

Preferably, a grid is superimposed on the body.

Preferably, the body is transparent.

Preferably, one of the straight edges of one of the openings forms a baseline of the protractor markings.

Preferably, the protractor markings radiate from a defined origin on the baseline.

As used herein, the term "mathematical instrument" is intended to mean a device or instrument for use in performing various tasks which occur primarily but not exclusively in the fields of mathematics, technical drawing, applied mathematics, etc. in order to facilitate the accurate drawing of lines, circles, measuring or drawing angles, and performing various other tasks which are encountered in such subjects.

As used herein, the term "rectangular" is intended to mean a shape having four sides describing four equal angles, the sides being either of equal length such as to define a square, or having a pair of opposed sides of one length and an other pair of opposed sides of a different length such as to define a more conventional rectangle shape.

As used herein, the term "markings" is intended to mean any text, numerals, lines, or similar indicia which may be printed or otherwise applied to the respective surface and in any suitable colour, style and size, but may also be defined by means other that the application of an ink or the like, and could for example be produced through the removal or omission of material from the surface on which the markings are formed.

### Brief description of the drawings

The present invention will now be described with reference to the accompanying drawing, in which:

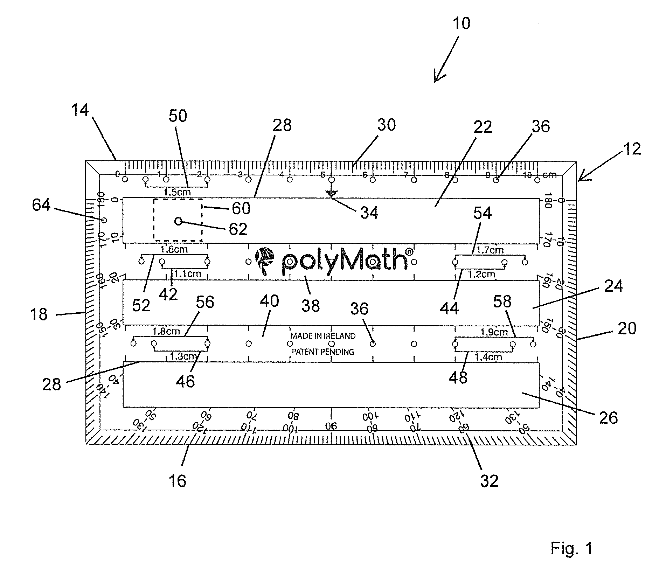

Figure 1 illustrates a plan view of an embodiment of a composite mathematical instrument according to the present invention.

### Detailed description of the drawings

Referring now to the accompanying drawing there is illustrated a composite mathematical instrument, generally indicated as 10, which in one particular embodiment defines particular units of measurement and particular subdivisions of these measurements, in this case centimetres (cm) and millimetres (mm). The mathematical instrument 10 of the illustrated embodiment is provided by way of example only and does not rule out the use of alternative units of measurement, alternative subdivisions of the units of measurement, for example feet (ft) and inches (in), a different number or configuration of apertures or holes as hereinafter described, or a different overall size and/or shape of the mathematical instrument 10, for example having rounded corners or bevelled edges, being square as opposed to rectangular, or being more elongate in one or other dimension.

The mathematical instrument 10 comprises a body 12 which in the embodiment illustrated is rectangular in form, having a first side 14 and a parallel opposed second side 16, a third side 18 and a parallel opposed fourth side 20. The first and second sides 14, 16 are of a first length while the second and third sides 18, 20 are of a second shorter length such that the body 12 is of conventional rectangular shape. It will however be appreciated that this shape may be varied as required, whereby all four sides 14, 16, 18, 20 could be of equal length in order to define a square, or the first and second sides 14, 16 could be even greater in length in order to define a more elongate rectangular shape. Certain shapes may suit particular applications of the mathematical instrument 10 better than others, and so it may be that the mathematical instrument 10 is available in a number of shapes and/or sizes.

The mathematical instrument 10 is also preferably formed from a transparent or substantially translucent material, and for example is preferably moulded from a clear polymer or the like. This will allow a user of the mathematical instrument 10 to view lines, text, numbering or other markings which the mathematical instrument 10 overlies when placed on a page or the like, the visibility of such permitting any of these lines or the like to be used as a reference point when utilising the mathematical instrument 10. The mathematical instrument 10 may also be formed from a coloured material which may provide some contrast between the mathematical instrument 10 and the underlying page or the like, in order to improve visualisation of one or more features or aspects of the mathematical instrument 10 as hereinafter described.

The body 12 is preferably substantially planar in form and relatively thin with respect to the length and width of the body 12, and for example may be 2-3mm in thickness, although it will of course be appreciated that the thickness of the body 12 may be varied as required or desired. An outer edge of each of the first, second, third and fourth sides 14, 16, 18, 20 is preferably bevelled in order to facilitate the accurate location of the tip of a drawing implement such as a pencil, pen or the like (not shown) against and along said side. The body 12 additionally defines at least one, and in the embodiment illustrated three internal openings, namely a first opening 22, a second opening 24 and a third opening 26. Each of the openings 22, 24, 26 are of elongate rectangular form such as to at least define a pair of straight and parallel edges 28. In addition each of the openings 22, 24, 26 are oriented such that the sides of each opening 22, 24, 26 are coincident with the sides 14, 16, 18, 20 of the body 12, and as a result the parallel and straight edges 28 of each of the openings 22, 24, 26 are parallel to one another. The openings 22, 24, 26 are thus said to be coincidentally orientated with the sides 14, 16, 18, 20 of the body 12. In mathematics and other fields of endeavour students may need to draw a series of parallel lines for a variety of reasons e.g. to draw a parallelogram, to draw a table for inserting data, or to draw a bar chart or a histogram. Usually these functions are carried out by using a ruler to draw each line individually. This functionality can now be performed using the mathematical instrument 10 of the present invention. The openings 22, 24, 26, in additional to enabling multiple parallel straight lines to be drawn, and making the mathematical instrument 10 easier to handle and manipulate for the user, permit additional functionality to be embodied in the mathematical instrument 10 and as will be described in greater detail hereinafter.

For example, instead of using two conventional setsquares (not shown) the mathematical instrument 10 may be used to draw a line parallel to an existing line through a predetermined point. The user places one side 14, 16, 18, 20 of the instrument 10 on the existing straight line. Then, holding any straight edged implement, e.g. a pencil, against one of the two sides 14, 16, 18, 20 which are perpendicular to the edge on the existing straight line and keeping the mathematical instrument 10 in contact with the straight edged implement, one moves the instrument 10 until it reaches the given point. The required line is then drawn.

The body 12 of the mathematical instrument 10 comprises ruler markings 30 which in the embodiment illustrated extend along an outer edge of the first side 14 in conventional fashion, although it will be appreciated that the ruler markings 30 could for example be provided along one or other of the straight and parallel edges 28 of one or more of the openings 22, 24, 26. In the embodiment illustrated the ruler markings 30 extend for a length of 10cm and are graded in millimetres, with each centimetre also being marked. It will of course be appreciated that alternative or additional dimensions may be provided. Thus the mathematical instrument can be used as a conventional ruler to both draw straight lines and to allow the length of existing or newly drawn lines to be measured.

The mathematical instrument 10 further comprises protractor markings 32 which in the embodiment illustrated extend around the second, third and fourth sides 16, 18, 20 and are graded in degrees with each 10 degree increment being marked by a suitable reference numeral, for example 30°, 90°, 180° etc. The protractor markings 32 are positioned around the second, third and fourth sides 16, 18, 20 such that the straight edge 28 of the first opening 22 closest to the ruler markings 30 forms a base line of the protractor markings 32, with an origin or centre point 34 of the protractor markings 32 being highlighted on this base line by an arrow.

The protractor markings 32 allow the instrument 10 to be used to draw lines at an angle to another line, for example at 30°, 45° 60°, and 90°, or to draw triangles or the like, thereby replacing conventional setsquares (not shown).

In addition to use as both a ruler and a protractor, the mathematical instrument 10 may also be used as a compass in order to draw circles within a range of diameters as described hereinafter. The mathematical instrument 10 is thus provided with a plurality of apertures 36 which are preferably dimensioned to permit the tip of a drawing instrument such as a pencil or pen (not shown), or alternatively a point such as a pin or the like to form a centre point of the compass which the mathematical instrument 10 will define.

In the embodiment illustrated a number of the apertures 36 are provided in a linear array along the ruler markings 30 at the 1 cm intervals. An additional aperture 36 is also preferably provided at the 0.5cm position. This linear array of apertures 36 permits circles to be drawn of radii between 0.5cm and 10cm in 0.5cm increments as a result of the location of the aperture 36 at the 0.5cm mark. It will of course be appreciated that the distance between the apertures 36 of the linear array may be altered in order to accommodate circles of different radii.

In addition to the linear array of apertures 36, a plurality of the apertures 36 are provided about the body 12 in paired groups as described hereinafter in detail. These groups of apertures 36 are preferably distributed along the first side 14 and on a first web 38 of the body 12 defined between the first and second openings 22, 24 and a second web 40 of the body 12 defined between the second and third openings 24, 26.

The paired groups of apertures 36 are, in the embodiment illustrated, provided in a first to a ninth group 42, 44, 46, 48, 50, 52, 54, 56, 58, the spacing between the pair of apertures 36 in each of the groups being different from the spacing of any of the other groups. Thus for example the pair of apertures 36 in the first group 42 are spaced at a distance of 1.1cm from one another, while in the second group 44 the spacing is 1.2cm, in the third group 46 1.3cm etc. up to the ninth group 58 in which the spacing is 1.9cm. It can also be seen that the pairs of apertures 36 are grouped such that two of the pairs share a common aperture 36, in this case the first group 42 and sixth group 52 share a common aperture 36, the second group 44 and seventh group 54 share a common aperture 36, and so on.

In addition each paired group of apertures 36 is positioned within a linear array of the apertures 36 formed in either the first or second webs 38, 40, or along the first side 14, which linear array of apertures is preferably positioned at 1cm intervals. It will therefore be appreciated that, for example using the paired apertures 36 of the first group 42, circles of radius 1.1cm to 7.1 cm, in 1 cm increments, may be drawn. Similarly using the apertures 36 in the second group 44 will allow circles of radius 1.2cm to 7.2cm, again in 1cm increments, to be drawn. As a result, in the embodiment illustrated, the mathematical instrument 10 will enable circles from 0.5 to 10cm to be drawn, in 0.5cm increments, and from 1cm to 8cm in 0.1cm increments.. It will be understood that the number and configuration of the apertures 36 may be varied as required in order to allow circles of a particular range of radii to be drawn. It will be appreciated that in addition, by using any two apertures 36 in the body 12, circles of other radii may be drawn.

To further improve the circle/arc drawing capabilities the mathematical instrument 10 may optionally comprise a slider 60 which is slidably and preferably releasable retained within one of the openings 22. 24. 26, and in the embodiment illustrated is located in the first opening 22. The slider 60 may be formed from any suitable material, and may for example be flexible or otherwise deformable in order to allow the slider 60 to be quickly and easily inserted and removed. In addition, although not illustrated, the outer edge of the slider 60 may comprise a single or double lip in order to receive the opposed straight and parallel edges 28 of the opening 22, thereby retaining the slider 60 in position. Alternatively the parallel edges 28 may each be modified to define a longitudinally extending track or channel (not shown) into which may be located a correspond tab (not shown) projecting from the slider 60. It will be understood that any other suitable arrangement may be employed in order to guide the slider 60 along the opening 22.

The slider 60 is provided with an aperture 62 which, in the embodiment illustrated, is centred in the slider 60 but need not be so. Similar to the apertures 36 a tip of a pencil or the like may be passed through the aperture 62. A co-operating aperture 64 is provided in the body 12, and in the embodiment illustrated is located approximately between the 170° and 180° protractor markings 32, which happen to coincide approximately with the centreline of the opening 22, and therefore in use is aligned with the aperture 62 in the slider 60. It will thus be understood that a tip of a pencil or the like can be passed through the aperture 64 in the body 12, to act as a centre of a circle/arc to be drawn, and another pencil tip or the like passed through the aperture 62 in the slider 60 in order to draw the outline of the circle/arc. The slider 60 can then be moved along the opening 22 in either direction until the desired radius has been established between the two apertures 62, 64 at which point the circle/arc can be drawn. In this way the mathematical instrument 10 can be used to draw circles which are not limited to having a radius in whole millimetres.

The mathematical instrument 10 may also incorporate a curved inner or outer edge (not shown), for example replacing one of the parallel straight edges 28, in order to allow an outline of the curve to be drawn using the instrument 10. The curve may for example be a standard deviation curve, a sine wave, parabolic or hyperbolic curve, or any other curve.

It will therefore be understood that the composite mathematical instrument 10 of the present invention provides a simple yet effective and comprehensive tool for handling multiple tasks to be undertaken in the fields of mathematics, technical drawing, etc. The advantage of the mathematical instrument 10 of the invention is that one simple, light, inexpensive instrument, without moving parts or sharp points, allows for a series of parallel lines to be drawn and can also function as the conventional instruments - ruler, compass, setsquares and protractor.

## Claims

1. A composite mathematical instrument comprising a planar substantially rectangular body, ruler markings disposed along at least a part of one side of the body, and protractor markings disposed along at least one other side of the body; one or more openings in the body, each having at least an opposed pair of straight and parallel edges, and an array of apertures in the body with which to draw circles.

2. A composite mathematical instrument according to claim 1 in which the protractor markings are disposed along three sides of the body.

3. A composite mathematical instrument according to claim 1 or 2 in which the at least one opening is substantially rectangular.

4. A composite mathematical instrument according to claim 3 in which the opposed straight edges of the at least one opening are substantially parallel with an opposed pair of the sides of the body.

5. A composite mathematical instrument according to any preceding claim comprising two or more of the openings.

6. A composite mathematical instrument according to claim 5 in which the opposed pair of straight and parallel edges of each opening are parallel with the opposed pair of straight and parallel edges of the other openings.

7. A composite mathematical instrument according to claim 5 or 6 in which the body defines a web between adjacent openings.

8. A composite mathematical instrument according to any preceding claim in which at least some of the apertures are arranged in a plurality of paired groups, the spacing between the pair of apertures in each group being different.

9. A composite mathematical instrument according to any of claims 5 to 8 in which at least some of the groups of apertures are provided on the one or more webs.

10. A composite mathematical instrument according to any preceding claim in which the ruler markings and/or the protractor markings extend inwardly from an exterior edge of the respective side of the body.

11. A composite mathematical instrument according to any preceding claim in which the one or more openings are coincidentally orientated with the sides of the body.

12. A composite mathematical instrument according to any preceding claim in which the one or more openings are bound by the sides of the body.

13. A composite mathematical instrument according to any preceding claim in which a grid is superimposed on the body.

14. A composite mathematical instrument according to any preceding claim in which the body is transparent.

15. A composite mathematical instrument according to any preceding claim in which one of the straight edges of one of the openings forms a baseline of the protractor markings.
